# EUROPÄISCHE PATENTSCHRIFT

(11) **EP 0 695 663 B1**
(45) Veröffentlichungstag und Bekanntmachung des Hinweises auf die Patenterteilung: **21.01.1998**
(21) Anmeldenummer: 95108113.2
(22) Anmeldetag: 27.05.1995
(51) Int. Cl.: B60K 20/02, F16H 59/02

(54) **Wählhebel für ein Kraftfahrzeuggetriebe**
Gear selector for a motor vehicle gearbox
Sélecteur de vitesses pour boîte de vitesses de véhicule automobile

(30) Priorität: 04.08.1994 DE 4427695
(43) Veröffentlichungstag der Anmeldung: 07.02.1996
(73) Patentinhaber: Bayerische Motoren Werke Aktiengesellschaft, 80788 München (DE)
(72) Erfinder: Wöste, Norbert, D-80939 München (DE); Neuner, Josef, D-83064 Raubling (DE)

(56) Entgegenhaltungen:
- DE-A- 4 209 930
- DE-A- 4 217 500
- DE-A- 4 342 460

## Beschreibung

Die Erfindung bezieht sich auf einen Wählhebel für ein Kraftfahrzeuggetriebe nach dem Oberbegriff des Hauptanspruchs.

Bei vielen Wählhebeln für Kraftfahrzeuggetriebe, insbesondere Automatikgetriebe sind Sicherungen eingebaut, um ein unbeabsichtigtes Schalten in bestimmte Fahrstufen zu verhindern. Solche Sicherungen können durch eine Kulisse mit Kulissenstufen dargestellt werden. In diese Kulissenstufen greift ein Rastelement, in der Regel eine in der Schalthebelstange geführte Raststange ein, die auf diese Weise den Wählhebel verriegelt bzw. verhindert, daß in eine andere Fahrstufe gewechselt werden kann. Die Raststange läßt sich über ein Betätigungselement am Schaltgriff des Wählhebels aus den Kulissenstufen herausbewegen und gibt dann den Wählhebel frei.

Nach dem Loslassen der Drucktaste drückt eine Rückstellfeder die Raststange in die Ausgangslage zurück. Diese Raststange schlägt dabei auf die Schaltkulisse mit deutlich vernehmbaren Geräusch auf. Ein solches Geräusch wird in vielen Fällen als störend empfunden.

Die DE-A-4342460 zeigt einen Wählhebel, bei dem die Raststange unmittelbar von einem im Schaltgriff beweglich gelagerten Betätigungsknopf beaufschlagt wird. Ziel dieser Lösung ist es, die auf den Betätigungsknopf wirkende Kraft zu minimieren, ohne daß unerwünschte Bewegungen des Betätigungsknopfes im Betrieb verursacht werden.

Aufgabe der Erfindung ist es, ein derartiges Geräusch bei einem Wählhebel für ein Kraftfahrzeuggetriebe zu verhindern bzw. auf ein erträgliches Maß zu reduzieren.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Nach der Erfindung ist also die Rückstellbewegung des Rastelementes gedämpft. Dadurch trifft sie mit verminderter Geschwindigkeit auf der Schaltkulisse auf, mit der Folge einer geringeren oder nahezu keiner Geräuschentwicklung. Je stärker der Rückstellweg gedämpft ist, desto geringer ist das Aufschlaggeräusch.

Bei einer bevorzugten Ausführungsform wird die Erfindung bei einem Wählhebel mit einer Wählhebelstange und einem daran befestigten Schaltgriff angewendet. Am Schaltgriff ist schwenkbar eine Drucktaste gelagert, die über einen Winkelhebel eine in der Wählhebelstange geführte Raststange beaufschlagt. Eine Dämpfungseinrichtung greift an dem Winkelhebel an. Dabei läßt sich als Dämpfungselement ein sogenannter Viskodämpfer verwenden, der an für sich bekannt ist und auf den verschiedensten Gebieten eingesetzt wird. Ein solcher Viskosedämpfer besteht aus einem Gehäuse, gefüllt mit einer zähen, also hochviskosen Flüssigkeit. In der Flüssigkeit dreht sich gegen deren Widerstand ein Flügelrad, was letztendlich eine Dämpfung der Drehbewegung des Flügelrades zur Folge hat.

Es liegt im Rahmen der Erfindung, die Dämpfungseinrichtung auch an anderer Stelle als am Winkelhebel angreifen zu lassen. So ist es zum Beispiel möglich, mit einer entsprechenden Dämpfungseinrichtung die Verschiebbarkeit der Raststange direkt zu dämpfen. Eine weitere Möglichkeit ist die Schwenkbewegung der Drucktaste durch eine geeignete Dämpfungseinrichtung zu beaufschlagen. Ziel nach der Erfindung ist es vornehmlich, das Rastelement, wie es auch immer ausgebildet ist und wie es auch immer betätigt wird, in seiner Rückstellbewegung zu dämpfen.

Nachfolgend wird ein bevorzugtes Ausführungsbeispiel der Erfindung anhand der dazugehörigen Zeichnung näher beschrieben.

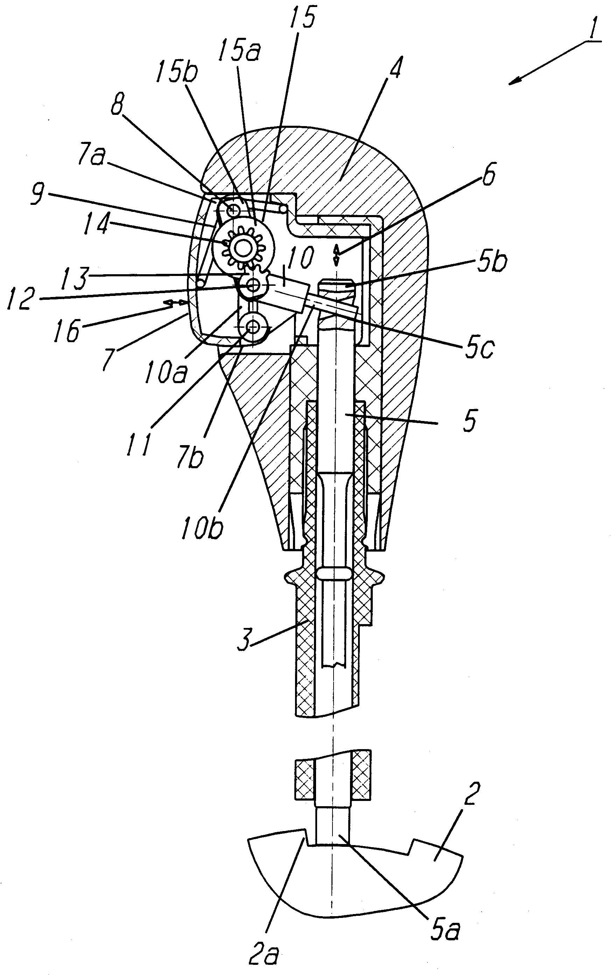

Die Zeichnung zeigt in der einzigen Figur einen Wählhebel 1 für ein nicht dargestelltes Kraftfahrzeuggetriebe, genauer für ein Automatikgetriebe. Der Wählhebel 1 läßt sich entlang einer angedeuteten Kulisse 2, die mit dem Fahrzeugaufbau fest verbunden ist, bewegen. Auf diese Weise lassen sich in bekannter Art die einzelnen Fahrstufen des Automatikgetriebes anwählen. Der Wählhebel 1 weist desweiteren eine hohle Wählhebelstange 3 auf, an deren, von der Schaltkulisse 2 angewandten Seite ein Schaltgriff 4 befestigt ist. In der Wählhebelstange 3 ist außerdem eine Raststange 5 verschiebbar gehalten, die mit einem unteren Endabschnitt 5a in eine Kulissenstufe 2a der Schaltkulisse 2 greift. Das obere Ende der Raststange 5 ragt in einen Hohlraum des Schaltgriffes 4 hinein. In diesem Hohlraum ist ein Betätigungsmechanismus untergebracht, mit dem die Raststange bewegt werden kann. Die Beweglichkeit der Raststange zeigt ein Doppelpfeil 6.

Der Betätigungsmechanismus besteht im einzelnen zunächst aus einer Drucktaste 7. Sie ist mit einem oberen Endabschnitt 7a am Schaltgriff drehbar gelagert. Die Lagerung selbst ist in der Zeichnung nicht erkennbar, jedoch ist die zugeordnete Drehachse mit der Bezugsziffer 8 belegt. Eine Rückstellfeder 9, die sich einmal am Schaltgriff 4 und zum anderen an der Drucktaste 7 abstützt, drückt die Drucktaste 7 aus dem Schaltgriff 4 heraus. Ein nicht näher bezeichneter Anschlag begrenzt diese Bewegung. Die Verschwenkbarkeit der Drucktaste zeigt ein Doppelpfeil 16.

Am unteren Endabschnitt 7b der Drucktaste 7 ist ein Winkelhebel 10 mit seinem einen Hebelarm 10a drehbar gelagert. Die Lagerung selbst ist wiederum nicht deutlich erkennbar, sie wird aber durch eine Drehachse 11 symbolisiert. Der andere Hebelarm 10b des Winkelhebels 10 greift mit einem Stift in eine Durchgangsbohrung 5c des oberen Endes 5b der Raststange 5. In einem Mittenabschnitt ist - wiederum nur angedeutet - der Winkelhebel 10 drehbar am Schaltgriff 4 gelagert. Die Drehachse weist die Bezugsziffer 12 auf.

Konzentrisch zu der Drehachse 12 besitzt der Winkelhebel 10 im Mittenbereich ein Zahnsegment 13, das mehrere nach oben weisende Zähne aufweist. Das Zahnsegment 13 ist fest mit dem Winkelhebel 10 verbunden. Diese Zähne kämmen in einem Zahnrad 14, das Teil eines Viskodämpfers 15 ist. Der Viskosedämpfer 15 besteht aus einem Gehäuse 15a, das mit Befestigungsaugen am Schaltgriff 4 festgelegt ist. In der Zeichnung ist lediglich ein Befestigungsauge 15b erkennbar, das sich im Bereich der Drehachse 8 befindet. Ein gegenüberliegendes Befestigungsauge befindet sich im Bereich der Drehachse 12, also der Lagerung des Winkelhebels 10 am Schaltgriff 4. In dem Gehäuse 15a des Viskodämpfers, nicht sichtbar, dreht sich ein Flügelrad in einer viskosen Flüssigkeit. Durch eine gemeinsame Welle sind Flügelrad und Zahnrad 14 miteinander verbunden.

Die Wirkungsweise des Wählhebels 1 ist wie folgt. Möchte der Fahrer den Wählhebel 1 über die Kulissenstufe 2a hinausbewegen, so drückt er auf die Drucktaste 7. Durch die gelenkige Anbindung an der Drucktaste 7 und seiner drehbeweglichen Lagerung im Schaltgriff 4 schwenkt der Winkelhebel 10 mit seinem Hebelarm 10b nach oben und nimmt die Raststange 5 mit. Gleichzeitig dreht das Zahnsegment 13 gegen den Uhrzeigersinn und dreht das Zahnrad 14. Dies ist aber bei dieser Bewegungsrichtung ohne größere Bedeutung, da die Kraft, die der Fahrer zum Niederdrücken der Drucktaste 7 aufbringt, sehr viel größer ist als der Widerstand, den das Flügelrad beim Drehen in der viskosen Flüssigkeit überwinden muß.

Das Ende 5a der Raststange 5 wird in die Schalthebelstange 3 hineingezogen. Der Fahrer kann jetzt den Schalthebel entweder nach links oder rechts bewegen, je nachdem welche Fahrstufe er einlegen möchte. Nachdem er diese Fahrstufe gewählt hat, läßt er die Drucktaste 7 wieder los. Die Rückstellfeder 9 drückt sie nach außen. Dabei nimmt sie den Winkelhebel 10 mit, dessen Zahnsegment nunmehr im Uhrzeigerichtung dreht und entsprechend das Zahnrad 14 mitnimmt. Dieses dreht sich wiederum gegen den Widerstand der Viskoseflüssigkeit im Viskodämpfer. Durch Abstimmung der Federkraft der Rückstellfeder 9 auf den Widerstand, den die Viskoseflüssigkeit auf das Flügelrad bzw. Zahnrad 14 ausübt, läßt sich die Rückstellbewegung der Raststange 5 in dem gewünschten Maß dämpfen. Entsprechend trifft die Raststange 5 mit ihrem Endabschnitt 5a mit verzögerter Geschwindigkeit auf der gewählten Kulissenstufe auf. Das Aufschlaggeräusch reduziert sich dementsprechend bzw. kann bei entsprechender Einstellung nahezu unterbunden werden.

## Patentansprüche

1. Wählhebel (1) für ein Kraftfahrzeuggetriebe mit einem Schaltgriff (4) und einer daran bewegbar angeordneten Drucktaste (7) über die ein Rastelement (5) betätigbar ist, wobei das Rastelement nach seinem Betätigen in einer gedämpften Rückstellbewegung selbständig in seine Ausgangslage zurückkehrt, dadurch gekennzeichnet, daß im Kraftfluß zwischen der Drucktaste (7) und dem Rastelement (5) eine Dämpfungselement (15) angeordnet ist.

2. Wählhebel nach Anspruch 1, gekennzeichnet durch folgende Merkmale:
- die mit einer Rückstellfeder (9) beaufschlagte Drucktaste (7) ist mit einem Endabschnitt (7a) schwenkbar am Schaltgriff (4) und mit dem gegenüberliegenden Endabschnitt (7b) über ein Drehgelenk (Drehachse 11) mit einem Hebelarm (10a) eines zweiarmigen Hebels (10) verbunden;
- der andere Hebelarm (10b) des zweiarmigen Hebels (10) greift an einer Raststange (5) an, die verschiebbar in einer hohlen Wählhebelstange (3) gehalten ist, wobei der Schaltgriff (4) fest verbunden auf der Wählhebelstange (3) sitzt;
- der zweiarmige Hebel (10) ist mit einem mittleren Abschnitt drehbar (Drehachse 12) am Schaltgriff (4) gelagert;
- der zweiarmige Hebel (10) beaufschlagt das Dämpfungselement.

3. Wählhebel nach Anspruch 2, dadurch gekennzeichnet, daß ein am mittleren Abschnitt des zweiarmigen Hebels (10) befestigtes und koaxial zur dortigen Drehachse (12) angeordnetes Zahnsegment (13) mit einem Zahnrad (14) eines am Schaltgriff (4) festgelegten Viskodämpfers (15) kämmt.

## Claims

1. A gear selector (1) for a motor vehicle gearbox with a gearchange knob (4) and a pushbutton (7) thereon such that it can move thereon and actuatable via a detent element (5), wherein the detent element after actuation returns to its starting position automatically in a dampened return movement, characterised in that a dampening element (15) is arranged in the path of force flow between the pushbutton (7) and the detent element (5).

2. A gear selector according to claim 1, characterised by the following features:
- the pushbutton (7) impinged upon by a return spring (9) is connected through one end section (7a) to the gearchange knob (4) with swivel action and through the opposite end section (7b) via a swivel joint (axis of rotation 11) to one lever arm (10a) of a two-arm lever (10);
- the other lever arm (10b) of the two-arm lever (10) engages with a locking rod (5) which is held in a hollow gear selector shaft (3) so that it can undergo displacement, with the gearchange knob (4) firmly secured on the gear selector shaft (3);
- the two-arm lever (10) is pivot-mounted through a central section (axis of rotation 12) on the gearchange knob (4);
- the two-arm lever (10) impinges on the damping element.

3. A gear selector according to claim 2, characterised in that a toothed segment (13), secured to the central section of the two-arm lever (10) and arranged coaxially to the axis of rotation (12) there, meshes with a gear wheel (14) of a viscodamper (15) secured to the gearchange knob (4).

## Revendications

1. Levier de changement de vitesses pour une boîte de vitesses de véhicule automobile (1), comprenant une poignée (4) munie d'un bouton-poussoir (7), mobile, qui actionne un élément d'encliquetage (5), cet élément d'encliquetage revenant automatiquement dans sa position de repos après son actionnement, sous l'effet d'un mouvement de rappel amorti,
caractérisé par
un élément d'amortissement (15) placé dans la ligne de transmission de force entre le bouton-poussoir (7) et l'élément d'encliquetage (5).

2. Levier de changement de vitesses selon la revendication 1,
caractérisé en ce que
- le bouton-poussoir (7) sollicité par un ressort de rappel (9) est relié par un segment d'extrémité (7a), de manière pivotante à une poignée (4) et par son segment d'extrémité (7b), opposé, par l'intermédiaire d'une articulation de rotation (axe de rotation 11) un bras de levier (10a) d'un levier (10) à deux bras,
- l'autre bras de levier (10b) du levier (10) à deux bras vient prendre dans une tige d'encliquetage (5) logée coulissante dans une tige de levier de vitesses (3), creuse, la poignée de commutation (4) étant montée solidairement sur la tige du levier de sélecteur (3),
- le levier (10) à deux bras est monté à rotation par son segment moyen (axe de rotation 12) sur la poignée (4),
- le levier (10) à deux bras sollicite l'élément d'amortissement.

3. Levier de changement de vitesses selon la revendication 2,
caractérisé par
un segment denté (13) prévu sur le segment médian du levier (10) à deux bras, en étant monté coaxialement à l'axe de rotation (12) de ce levier, et engrenant avec une roue dentée (14) d'un amortisseur à fluide visqueux (15) fixé sur la poignée (4).
